Europäisches Patentamt

European Patent Office

Office européen des brevets

(11) Veröffentlichungsnummer: **0 038 495**
**B1**

(12) # EUROPÄISCHE PATENTSCHRIFT

(45) Veröffentlichungstag der Patentschrift:
27.06.84

(51) Int. Cl.³: **H 02 K 3/52, H 02 K 3/18**

(21) Anmeldenummer: **81102764.8**

(22) Anmeldetag: **10.04.81**

(54) **Mit Reihen- und Nebenschlusswicklung bestückter Hauptpol für eine unkompensierte Gleichstrommaschine.**

(30) Priorität: **17.04.80 DE 3014837**

(43) Veröffentlichungstag der Anmeldung:
**28.10.81 Patentblatt 81/43**

(45) Bekanntmachung des Hinweises auf die Patenterteilung:
**27.06.84 Patentblatt 84/26**

(84) Benannte Vertragsstaaten:
**CH IT LI SE**

(56) Entgegenhaltungen:
**DE - C - 591 165**
**DE - C - 1 151 594**

(73) Patentinhaber: **SIEMENS AKTIENGESELLSCHAFT,**
**Berlin und München Wittelsbacherplatz 2,**
**D-8000 München 2 (DE)**

(72) Erfinder: **Kraus, Waldemar, Siemensstrasse 66,**
**D-8501 Schwanstetten (DE)**
Erfinder: **Schmidt, Kurt, Harsdörffer Strasse 46,**
**D-8500 Nürnberg (DE)**

**Beschreibung**

Die Erfindung betrifft einen mit Reihen- und Nebenschlußwicklung bestückten und als Ganzes montierbaren Hauptpol für eine unkompensierte Gleichstrommaschine nach dem Oberbegriff des Patentanspruches 1.

Bei solchen Maschinen sind meistens die Nebenschlußwicklung und die Reihenschlußwicklung koaxial und abstandslos zueinander angeordnet, wobei entweder die Reihenschlußwicklung oder die Nebenschlußwicklung den Polkern unmittelbar umgibt, der im bewickelten Zustand als Ganzes am Joch befestigbar ist. Diese koaxiale Wicklungsanordnung erfordert eine konstruktive Anpassung beider Wicklungen aneinander und besondere Vorkehrungen beim Wickelvorgang, da die Leiterquerschnitte beider Wicklungen sehr verschieden groß bemessen sind. In der Regel wird die fertig gewickelte und abgebundene Innenspule nachträglich und meist an einem anderen Arbeitsplatz mit der Außenspule zusammengefügt. Außerdem wird die Entwärmung der Innenspule durch die sie umgebende Außenspule verschlechtert, da ihre Oberfläche durch das zwischen beiden anzuordnende Isoliermaterial und die Außenspule größtenteils abgedeckt ist. Dieser Abdeckungseffekt wird besonders verstärkt bei niedrigen Wicklungen, wie sie bei kleinbauenden Maschinen mit geringen Polhöhen eingesetzt werden. Hinzu kommt, daß eine möglichst große Ausnutzung des Polraumes, die zu einer guten elektrischen Ausnutzung Voraussetzung ist, angestrebt wird. So muß bei den bekannten Ausführungen der wickeltechnisch einfachste rechteckige Spulenquerschnitt oftmals aufgegeben und eine komplizierter zu fertigende Querschnittsform vorgesehen werden.

Bei einer aus der GB-PS 1 552 858 bekannten Gleichstrommaschine ist radial über der Nebenschlußwicklung an dieser und an dem ringförmigen Joch eng anliegend die Reihenschlußwicklung mit gleichgroßem rechteckförmigen Querschnitt wie die Nebenschlußwicklung vorgesehen, so daß die beiden niedrigen Wicklungen mit ihren größeren Querschnittsflächen abdeckend aneinanderliegen und nur die kleineren äußeren Umfangsflächen weitgehend unabgedeckt bleiben. Solche Wicklungen bedürfen wegen der sehr unterschiedlichen Querschnitt-Seitenlängen einer aufwendigeren Befestigung am Hauptpol und haben durch die gegenseitige großflächige Abdeckung Nachteile bei ihrer Entwärmung. Der bewickelte Hauptpol kann als Ganzes am Joch lösbar befestigt sein.

Bei einer aus der DE-PS 1 151 594 bekannten unkompensierten Gleichstrommaschine mit Haupt- und Wendepolen ist jeder Hauptpol mit einer am Rücken des Polschuhes abgestützten Nebenschlußwicklung von im wesentlichen trapezförmigem Querschnitt versehen und jedem Hauptpol sowie einem benachbarten Wendepol eine unterhalb der Nebenschlußwicklung und der Wendepolwicklung angeordnete, beiden gemeinsame Reihenschlußwicklung zugeordnet, die an den beiden Polen nur innerhalb der Maschine, d. h. bei am Joch montierten Polen, nachträglich angebracht werden kann. Zum Halten der besagten Reihenschlußwicklung unterhalb der jeweiligen Polwicklungen ist der Wendepol mit einem abbiegbaren Halteblech und der Polschuh des Hauptpoles an seiner angewandten Längsseite mit einer Aufnahmenut versehen, in die die betreffende Längsseite mit einer Aufnahmenut versehen, in die die betreffende Längsseite der Reihenschlußwicklung eingelegt, danach die Reihenschlußwicklung über den Wendepol geklappt und an diesem mit der anderen Längsseite durch das umgebogene Halteblech gehalten wird. Die aus wenigen Windungen starker Leiter gebildete steife Reihenschlußwicklung muß zum Umfassen beider Pole entsprechend gebogen ausgeführt werden, was die Herstellung erschwert.

Der Erfindung liegt die Aufgabe zugrunde, für einen Hauptpol der eingangs genannten Art eine einfache Ausführung der Nebenschlußwicklung bei einer optimalen Ausnutzung des Polraumes und bestmöglicher Entwärmung der beiden Wicklungen zu erreichen, wobei keine erschwerende konstruktive Verknüpfung beider Spulen miteinander erforderlich und die Anwendung auch bei Maschinen ohne Wendepole möglich ist.

Die Lösung der gestellten Aufgabe gelingt durch die Merkmale nach dem Kennzeichen des Patentanspruches 1.

Vorteilhafte Ausgestaltungen der Erfindung sind Gegenstand der anhängigen Patentansprüche.

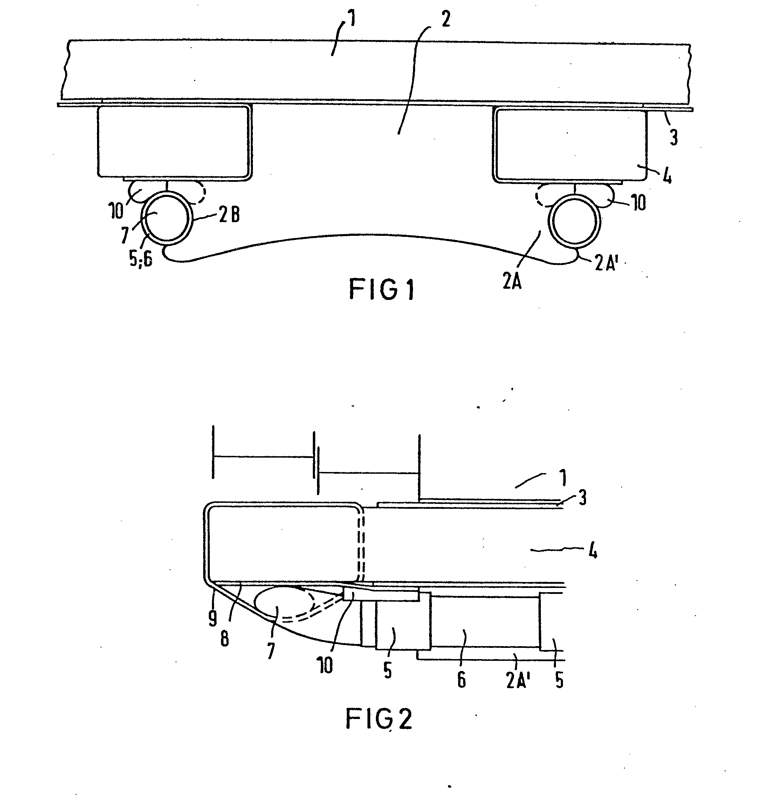

In der Zeichnung ist ein Ausführungsbeispiel der Erfindung schematisch im Längs- und Querschnitt nach Fig. 1 und 2 durch den bewickelten Hauptpol dargestellt und nachfolgend näher erläutert.

Zwischen dem Joch 1 (= eckige Maschine) und dem an zwei Längsseiten eines Polkernes 2 vorragenden Polschuhen 2A ist unter Einfügen von Flachisoliermaterial 3 eine Nebenschlußwicklung 4 von rechteckförmigem Querschnitt eingepaßt, die mit einem Teil ihrer Oberfläche freiliegt. In den Seitenflächen 2A' des Polschuhes 2A sind gemäß Fig. 1 Ausnehmungen 2B von halbkreisförmiger Kontur vorgesehen, in die eine gesondert gewickelte und mit einem mit Klebeband 5 verschlossenen Handwickel aus Flächenisoliermaterial 6 je Längsseite isolierte Reihenschlußwicklung 7 eingeschnappt gehalten ist, wobei der kreisförmige Querschnitt der aus mehreren parallelen Runddrähten bestehenden Reihenschlußwicklung an den vom Polkern beabstandeten freiliegenden stirnseitigen Abschnitten gemäß Fig. 2 oval abgeflacht und an die freien Stirnseiten der Nebenschlußwicklung unter Zwischenfügen einer Isolierbeilage 8 durch Haltebunde 9 angelegt gehalten ist, um eine platzsparende Ausführung zu erhalten.

Der bewickelte Hauptpol wird einer Harzimprägnierung unterzogen und bildet nach dem Aushärten eine steife Einheit, wozu zwischen die beiden Wicklungen an den Längsseiten eingefügte imprägnierbare Isolierabstützungen 10 noch vorteilhaft vorgesehen werden können.

**Patentansprüche**

1. Mit Reihen- und Nebenschlußwicklung (4, 7) bestückter und als Ganzes montierbarer Hauptpol für eine unkompensierte Gleichstrommaschine, bei dem die den Polkern (2) unmittelbar umgebende Nebenschlußwicklung (4) von rechteckförmigem Querschnitt am Rücken des über die beiden Längsseiten des Polkernes vorragenden Polschuhes (21) anliegt, dadurch gekennzeichnet, daß an den beiden an den Rücken angrenzenden Seitenflächen (2A') des Polschuhes (2A) je eine Ausnehmung (2B) vorgesehen ist, in denen die Längsseiten der Reihenschlußwicklung (7) gehalten sind und daß die freiliegenden, vom Polkern (2) beabstandeten Stirnseiten der Reihen- und Nebenschlußwicklung durch Haltebunde (9) zusammengehalten sind.

2. Hauptpol nach Anspruch 1, dadurch gekennzeichnet, daß die Ausnehmungen (2B) halbkreisförmige Kontur haben, in denen die mit kreisförmigem Querschnitt gewickelte Reihenschlußwicklung (7) selbsthaltend eingeschnappt ist.

3. Hauptpol nach Anspruch 1 und 2, dadurch gekennzeichnet, daß die Reihenschlußwicklung (7) an den Stirnseiten abgeflacht ist.

4. Hauptpol nach Anspruch 1, 2 oder 3, dadurch gekennzeichnet, daß zwischen den Längsseiten der beiden Wicklungen (4, 7) harzimprägnierbare abstützende Zwischenpolster (10) angeordnet sind und der bestückte Hauptpol durch härtbares Tränkharz zu einer steifen Einheit zusammengehalten ist.

**Claims**

1. A main pole, which is provided with series and shunt windings (4, 7) and can be mounted as a whole, for an uncompensated direct current machine, wherein the shunt winding (4), which has a rectangular cross-section and directly surrounds the pole core (2), rests against the rear of the pole shoe (2A) which projects beyond the two longitudinal sides of the pole core, characterized in that on the two lateral surfaces (2A') of the pole shoe (2A) which adjoin the rear, there is in each case arranged a respective recess (2B), in which the longitudinal sides of the series winding (7) are held; and that the exposed end faces of the series and shunt windings, which are spaced from the pole core (2), are held together by holding bands (9).

2. A main pole according to claim 1, characterized in that the recesses (2B) have a semi-circular section, into which the series winding (7), which is wound so as to have a circular cross-section, snaps in self-holding manner.

3. A main pole according to claim 1 and 2, characterized in that the series winding (7) is flattened at the end faces.

4. A main pole according to claim 1, 2 or 3, characterized in that, between the longitudinal sides of the two windings (4, 7), there are arranged resin-impregnatable, supporting intermediate pads (10) and the main pole with its equipment is held together to form a rigid unit by hardenable impregnating resin.

**Revendications**

1. Pôle principal, garni d'un enroulement série et en dérivation (4, 7) et pouvant être monté comme un tout, pour une machine à courant continu non compensée, dans lequel l'enroulement en dérivation (4) de section transversale de forme rectangulaire, qui entoure directement le noyau polaire (2), s'appuie sur l'arrière de la pièce polaire (2A) s'avançant au delà des deux côtés longitudinaux du noyau polaire, caractérisé par le fait qu'au niveau des deux faces latérales (2A') de la pièce polaire qui sont contiguës à l'arrière il est respectivement prévu un évidement (2B) dans lequel sont maintenus les côtés longitidinaux de l'enroulement série (7), et que les faces frontales libres de l'enroulement série et en dérivation, qui sont situées à une certaine distance du noyau polaire (2), sont maintenues assemblées par des brides de fixation (9).

2. Pôle principal suivant la revendication 1, caractérisé par le fait que les évidements (2B) ont un contour semi-circulaire dans lequel l'enroulement série (7), bobiné avec une section transversale de forme circulaire, est enclenché de manière à s'y maintenir de lui-même.

3. Pôle principal suivant les revendications 1 et 2, caractérisé par le fait que l'enroulement série (7) est aplati au niveau des faces frontales.

4. Pôle principal suivant la revendication 1, 2 ou 3, caractérisé par le fait qu'entre les côtés longitudinaux des deux enroulements (4, 7) sont disposés des rembourrages intermédiaires (10), qui s'appuient et qui peuvent être imprégnés de résine, et que le pôle principal garni est maintenu assemblé pour former une unité rigide à l'aide de résine d'imprégnation durcissable.

FIG 1

FIG 2